# EUROPÄISCHE PATENTSCHRIFT

(11) **EP 1 321 749 B1**
(45) Veröffentlichungstag und Bekanntmachung des Hinweises auf die Patenterteilung: **26.08.2009**
(21) Anmeldenummer: 02028245.5
(22) Anmeldetag: 16.12.2002
(51) Int. Cl.: G01F 3/38, G01F 22/02

(54) **Vorrichtung zur Bestimmung des Volumens eines Gases bei Atmosphärendruck**
Device to determine gas volume at atmospheric pressure
Appareil pour déterminer le volume de gaz sous pression atmosphérique

(30) Priorität: 19.12.2001 DE 10162286
(43) Veröffentlichungstag der Anmeldung: 25.06.2003
(73) Patentinhaber: Schläfer, Wolfgang, 76773 Kuhardt (DE)
(72) Erfinder: Schläfer, Wolfgang, 76773 Kuhardt (DE)
(74) Vertreter: Dimmerling, Heinz

(56) Entgegenhaltungen:
- EP-A- 0 560 571
- FR-A- 2 767 206
- US-A- 5 460 030
- US-A- 5 742 523
- JOHN L. PARK: "Boyle's Law" ,, 1996, XP002251257 Gefunden im Internet: <URL:HTTP://DBHS.WVUSD.K12.CA.US/GASLAW/GA S-BOYLE.HTML> [gefunden am 2003-08-14]

## Beschreibung

Die Erfindung betrifft eine Vorrichtung nach dem Oberbegriff des Anspruchs 1, zur Bestimmung des Volumens eines Gases bei Umgebungsdruck, mit einem Behälter eines vorbestimmten Volumens, welcher über eine Zuführleitung befüllbar und über eine Auslaßleitung entleerbar ist.

Zur Messung eines Gasvolumens oder eines Gasdurchflusses sind Gaszähler bekannt, welche zwei Lederbälge ausweisen, die sich abwechselnd füllen und leeren und jede Entleerung auf ein Zählwerk übertragen. Derartige Gaszähler werden beispielsweise als Haushalts-Gaszähler verwendet.

Zwar läßt sich mittels dieser Gaszähler die Menge eines in einem Haushalt verbrauchten Gases genügend genau bestimmen, jedoch eignen sich derartige Zähler nicht zur Bestimmung einer sehr geringen Gasmenge. Zur Bestimmung von geringen Gasmengen, wie sie beispielsweise bei Gärprozessen auftreten, sind Meßvorrichtungen bekannt, bei denen in einem flüssigkeitsgefüllten Behälter eine um eine Achse verschwenkbare becherförmige Meßzelle angeordnet ist.

Das zu messende Gas wird unterhalb der becherförmigen Meßzelle in den flüssigkeitsgefüllten Behälter eingeleitet, so daß das Gas beim Aufströmen sich in der Meßzelle sammelt. Der durch das in der Meßzelle gesammelte Gas entstehende Auftrieb bewirkt ein Verschwenken der Meßzelle um ihre Schwenkachse. Ab einer gewissen Verschwenkung wird das Gas nicht mehr in der Meßzelle gehalten und strömt nach oben aus der Meßzelle, so daß sich die Meßzelle vollständig entleert. Danach schwenkt die Meßzelle wieder in ihre Anfangsposition, so daß sich in ihr erneut Gas ansammelt.

Die Anzahl der Entleerungszyklen wird mittels eines Zählers erfaßt. Durch Multiplikation des Zählerstandes mit dem Volumen der Meßzelle läßt sich die Menge des Gases bestimmen.

Nachteilig bei der bekannten Vorrichtung ist zum einen der komplizierte Aufbau. Zum anderen wird durch das aufsteigende Gas die Verdunstung der Flüssigkeit begünstigt, wodurch häufig Flüssigkeit nachgefüllt werden muß. Darüber hinaus ist das Meßverfahren relativ langsam.

Aus der FR-A-2 767 206 ist eine Vorrichtung zur Erzeugung geringer Gasmengen bekannt, mit einem Behälter eines vorbestimmten Volumens, welcher über eine Zuführleitung befüllbar und über eine Auslassleitung entleerbar ist. Die Vorrichtung weist des Weiteren einen ersten Drucksensor zur Erfassung des Drucks im Inneren des Behälters und einen zweiten Drucksensor zur Erfassung des Drucks in der Zuführleitung auf.

Des Weiteren ist aus der US-A-5 742 523 eine Vorrichtung bekannt, mittels welcher über eine Zuleitung eine vorbestimmte Masse eines Gases an ein System geliefert werden kann bei einem vorbestimmten Arbeitsdruck, welcher im Wesentlichen größer als 100 bar ist. Die Vorrichtung hat einen Behälter eines bekannten Volumens, welcher ein Einlassventil und ein Auslassventil hat. Das Auslassventil ist über eine Steuerleitung mit der Zuleitung verbunden. Ein Volumen eines Gases wird in den Behälter geleitet, bis der Gasdruck in dem Behälter einen ersten vorbestimmten Wert erreicht, welcher größer als der Arbeitsdruck ist. Die Temperatur des Gases im Behälter wird gemessen und zur Berechnung eines zweiten Drucks verwendet. Die gemessene Temperatur und der berechnete zweite Druck werden in einem Speicher gespeichert. Daraufhin wird das Auslassventil geöffnet, bis der Gasdruck in dem Behälter den berechneten Druck erreicht. Entspricht der Gasdruck im Behälter dem berechneten zweiten Druck, wird das Auslassventil geschlossen.

Weiterhin ist aus der US-A-5 460 030 eine Anordnung zur Bestimmung des Volumens einer in einem Kühlsystem eines Motors eingeschlossenen Luftmenge bekannt, bei der in das Kühlsystem eine vorbestimmte Menge Luft gepresst wird. Aufgrund des durch das Einpressen der Luftmenge in das Kühlsystem hervorgerufenen Druckänderung im Kühlsystem lässt sich unter Anwendung des Boyle'schen Gesetzes das Volumen der eingeschlossenen Luftmenge bestimmen.

Es ist Aufgabe der Erfindung, eine eingangs genannte Vorrichtung derart auszubilden, daß sie zur schnellen und genauen Erfassung einer geringen Gasmenge geeignet ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Vorrichtung zur Bestimmung des Volumens eines Gases bei Umgebungsdruck, insbesondere Atmosphärendruck gemäß Anspruch 1 vorgesehen.

Dadurch, daß ein erster als Differenzdruckmesser ausgebildeter Druckmesser vorgesehen ist, zur Erfassung des Drucks im Inneren des Behälters, sowie ein zweiter Druckmesser vorgesehen ist, zur Erfassung des Umgebungsdrucks beziehungsweise Atmosphärendrucks, läßt sich auf einfache Weise unter Anwendung des Gesetzes von Boyle das Volumen des sich im Inneren des Behälters befindlichen Gases bestimmen. Denn gemäß dem Gesetz von Boyle gilt p₁V₁ = p₂V₂, sofern die Temperatur des Gases konstant bleibt.

Zur Bestimmung des Volumens des Gases wird das Gas in den Behälter geleitet und danach der Druck in dem Behälter gemessen. Das Produkt aus dem im Inneren des Behälters herrschenden Druck und dem Behältervolumen entspricht dem Produkt aus dem Volumen des Gases beispielsweise bei Atmosphärendruck und dem Atmosphärendruck. Somit läßt sich das Volumen des Gases bei Atmosphärendruck durch Bildung des Produktes aus dem Behältervolumen und dem Quotienten aus dem Druck im Inneren des Behälters bei eingeleitetem Gas und Atmosphärendruck bestimmen. Voraussetzung ist jedoch, daß die Temperatur des Gases konstant ist.

Besonders vorteilhaft ist eine Ausführungsform der Erfindung, bei der in der Zuführleitung ein erstes Ventil und in der Auslaßleitung ein zweites Ventil angeordnet ist. Durch die Ventile läßt sich die erfindungsgemäße Vorrichtung auf sehr einfache Weise und zuverlässig verwenden. Sind beide Ventile offen, ist die erfindungsgemäße Vorrichtung, sofern sie sich in einer Prozeßanordnung befindet, nicht wirksam. Unter der Voraussetzung, daß das behälterseitig abgewandte Ende der Auslaßleitung in die Atmosphäre führt, entspricht der Druck im Inneren des Behälters dem Atmosphärendruck.

Zum Messen der mittels der Zuführleitung dem Behälter zugeführten Gasmenge wird das in der Auslaßleitung angeordnete zweite Ventil geschlossen. Durch die Zuführung von Gas steigt der Druck im Behälter an. Wird das in der Zuführleitung angeordnete erste Ventil geschlossen, kann das Volumen der sich dann im Behälter befindlichen Gasmenge durch Anwendung des Gesetzes von Boyle bestimmt werden.

Nach der Bestimmung des Gasvolumens kann das in der Auslaßleitung angeordnete zweite Ventil geöffnet werden, wodurch sich das im Behälter befindliche Gas entspannt, bis der Druck im Behälterinneren wieder dem Atmosphärendruck entspricht. Danach kann das in der Auslaßleitung angeordnete zweite Ventil wieder geschlossen und das in der Zuführleitung angeordnete erste Ventil wieder geöffnet werden. Hierdurch strömt erneut Gas in den Behälter, wodurch der Druck im Inneren des Behälters ansteigt und ein neuer Meßzyklus beginnt.

Durch Bildung der Summe der bei jedem Meßzyklus ermittelten Gasvolumen läßt sich das Gesamtvolumen des dem Behälter zugeführten Gases ermitteln. Das nach dem Öffnen des in der Auslaßleitung angeordneten zweiten Ventils im Behälter unter Atmosphärendruck verbleibende Restgas ist gegebenenfalls als Korrekturwert zu berücksichtigen.

Als besonders vorteilhaft hat sich eine Ausführungsform der Erfindung herausgestellt, bei der der erste Druckmesser ein Differenzdruckmesser ist. Hierdurch läßt sich die erfindungsgemäße Vorrichtung auf besonders einfache Weise verwenden. Darüber hinaus wird durch die Verwendung eines Differenzdruckmessers die Empfindlichkeit beziehungsweise Genauigkeit der Meßvorrichtung erhöht, da Differenzdruckmesser empfindlicher ausgebildet sein können, als Absolutdruckmesser. Bei der Verwendung eines Differenzdruckmessers kann der Druckmesser oder das vom Druckmesser abgegebene Signal kalibriert werden, wenn das in der Auslaβleitung angeordnete zweite Ventil geöffnet ist. Es ist somit möglich, nach jedem Meßzyklus eine Kalibrierung des ersten Druckmessers vorzunehmen, was sich sehr vorteilhaft auf die Genauigkeit der erfindungsgemäßen Vorrichtung auswirkt.

Als sehr vorteilhaft hat sich des weiteren eine Ausführungsform der Erfindung herausgestellt, bei der ein Temperaturmesser vorgesehen ist, zur Erfassung der Gastemperatur im Inneren des Behälters. Durch den Temperaturmesser kann gewährleistet werden, daß die Erfassung des Drucks im Inneren des Behälters bei einer konstanten Temperatur erfolgt. Sollte sich die Temperatur des Gases erhöht haben, könnte mit der Erfassung des Drucks im Inneren des Behälters solange zugewartet werden, bis die Temperatur wieder ihren Ausgangswert erreicht hat.

Mittels des Temperaturmessers ist es aber auch möglich, die Temperatur bei der Berechnung des Gasvolumens zu berücksichtigen. Denn bei nicht konstanter Temperatur gilt: p₁V₁/T₁=p2V₂/T₂ = konstant.

Als sehr vorteilhaft hat sich auch eine Ausführungsform der Erfindung herausgestellt, bei der ein Komparator vorgesehen ist, zum Vergleichen des Gasdruckes im Inneren des Behälters mit einem Schwellwert. Hierdurch ist es auf einfache Weise möglich, in einem Meßzyklus eine vorbestimmte Menge Gas zu bestimmen. Der Schwellwert kann so eingestellt werden, daß er dem Ausgangssignal des ersten Druckmessers bei einem vorbestimmten Druck entspricht. Der vorbestimmte Druck kann prozeßabhängig gewählt werden, wodurch sich die Messung des Gasvolumens sehr vereinfachen kann. Zum anderen kann der vorbestimmte Druck so gewählt werden, daß der überwachte Prozeß nicht durch eine durch die Messung bedingte Druckerhöhung beeinträchtigt wird.

Dadurch, daß bei der erfindungsgemäßen Vorrichtung der Atmosphärendruck erfaßt wird, kann die Vorrichtung unabhängig von Umgebungsbedingungen verwendet werden. Des weiteren läßt sich die Bestimmung des Gasvolumens sehr schnell durchführen, da die Vorrichtung keine beweglichen Teile enthält. Durch die schnelle Messung und die damit einhergehende hohe Anzahl von Meßzyklen pro Zeiteinheit läßt sich die erfindungsgemäße Vorrichtung auch als Durchflußmesser verwenden. Sehr vorteilhaft ist auch, daß die Betriebsweise der erfindungsgemäßen Vorrichtung umkehrbar ist, das heißt, daß die Zuführleitung als Auslaßleitung und die Auslaßleitung als Zuführleitung betreibbar ist.

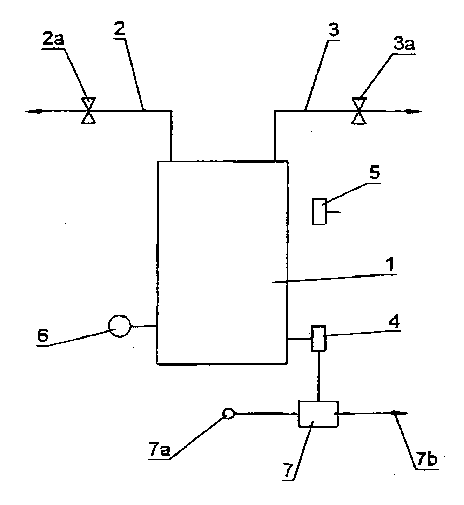

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur eine schematische Anordnung einer erfindungsgemäßen Vorrichtung.

Wie der Zeichnung entnommen werden kann, ist an einem Behälter 1, welcher ein konstantes vorbestimmtes Volumen hat, mit einer Zuführleitung 2 und eine Auslaßleitung 3 angeschlossen. In der Zuführleitung 2 ist ein erstes Ventil 2a und in der Auslaßleitung 3 ist ein zweites Ventil 3a angeordnet. Mittels des ersten Ventils 2a läßt sich die Zuführleitung 2 vollständig verschließen. Mittels des zweiten Ventils 3a läßt sich die Auslaßleitung 3 vollständig verschließen.

Der Behälter 1 weist einen ersten Druckmesser 4 auf, mittels dem der Druck im Inneren des Behälters 1 erfaßbar ist. Der erste Druckmesser 4 ist als Differenzdruckmesser ausgebildet.

Des weiteren ist am Behälter 1 ein zweiter Druckmesser 5 angeordnet, mittels dem der Atmosphärendruck bestimmbar ist.

Der Behälter 1 weist des weiteren einen Temperaturmesser 6 auf, mittels dem die Temperatur im Inneren des Behälters 1 meßbar ist. Der Temperaturmesser 6 läßt sich zur Kontrolle der Konstanz der Temperatur verwenden. Die vom Temperaturmesser 6 erfaßte Temperaturänderung könnte aber auch in die Berechnung des Gasvolumens einfließen.

Das Ausgangssignal des ersten Druckmessers 4 wird auf einen Komparator 7 gegeben, in dem es mit einem Schwellwert 7a verglichen wird. Erreicht der Druck im Inneren des Behälters 1 einen dem Schwellwert 7a entsprechenden vorbestimmten Druck, gibt der Komparator 7 an seinem Ausgang 7b ein Signal ab.

Zur Messung des Volumens des dem Behälter 1 über die Zuführleitung 2 zugeführten Gases wird zunächst das erste Ventil 2a geschlossen und das zweite Ventil 3a geöffnet. Hierdurch nimmt der Druck im Inneren des Behälters 1 den Wert des Atmosphärendruckes an. In diesem Zustand wird der erste Druckmesser 4 so kalibriert, daß sein Ausgangssignal null ist. Statt dessen könnte aber auch der Wert des Ausgangssignals erfaßt werden, so daß dieser Wert bei der späteren Messung berücksichtigt werden kann.

Nachdem der erste Druckmesser 4 kalibriert ist, wird das zweite Ventil 3a geschlossen und das erste Ventil 2a geöffnet. Hierdurch strömt über die Zuführleitung 2 Gas in den Behälter 1. Durch das zuströmende Gas steigt der Druck im Inneren des Behälters 1 an. Entspricht der Druck im Inneren des Behälters 1 dem Schwellwert 7a, liegt am Ausgang 7b des Komparators 7 ein Signal an. Durch dieses Signal wird veranlaßt, daß das erste Ventil 2a geschlossen und das zweite Ventil 3a geöffnet wird. Hierdurch entspannt sich das Gas im Inneren des Behälters 1.

Nachdem im Inneren des Behälters 1 wieder Atmosphärendruck herrscht, wird das zweite Ventil 3a erneut geschlossen und das erste Ventil 2a erneut geöffnet. Ein weiterer Meßzyklus beginnt. Durch Multiplikation der Anzahl der Meßzyklen mit der pro Meßzyklus in den Behälter 1 eingeleiteten Gasmenge läßt sich die Gesamtgasmenge bestimmen. Da die Meßzyklen sehr schnell aufeinanderfolgen können, läßt sich die Vorrichtung auch als Durchflußmesser verwenden.

## Patentansprüche

1. Vorrichtung zur Bestimmung des Volumens eines Gases bei Umgebungsdruck, mit einem Behälter (1) eines vorbestimmten Volumens, welcher über eine Zuführleitung (2) befüllbar und über eine Auslassleitung (3) entleerbar ist, wobei in der Zuführleitung (2) ein erstes Ventil (2a) und in der Auslassleitung (3) ein zweites Ventil (3a) angeordnet ist, sowie ein erster Druckmesser (4) vorgesehen ist, zur Erfassung des Drucks im Inneren des Behälters (1), **dadurch gekennzeichnet,**
**dass** ein zweiter Druckmesser (5) vorgesehen ist, zur Erfassung des Umgebungsdruckes, und der erste Druckmesser (4) ein Differenzdruckmesser ist,
dessen einer Anschluss mit dem Inneren des Behälters (1) und dessen anderer Anschluss mit der Umgebung verbunden ist.

2. Vorrichtung nach Anspruch 1,
**dadurch gekennzeichnet,**
**dass** ein Temperaturmesser (6) vorgesehen ist, zur Erfassung der Gastemperatur im Inneren des Behälters (1).

3. Vorrichtung nach Anspruch 1 oder 2,
**dadurch gekennzeichnet,**
**dass** ein Komparator (7) vorgesehen ist, zum Vergleichen des Gasdrucks im Inneren des Behälters (1) mit einem Schwellwert (7a).

## Claims

1. Device for determining the volume of a gas at atmospheric pressure, comprising a.container (1) of predetermined volume which can be filled via a feed line (2) and can be emptied via an outlet line (3), wherein a first valve (2a) is arranged in the feed line (2) and a second valve (3a) is arranged in the outlet line (3), and a first pressure gauge (4) is provided for detecting the pressure in the interior of the container (1), **characterised in that** a second pressure gauge (5) is provided for detecting the atmospheric pressure and the first pressure gauge (4) is a differential pressure gauge, the first connector of which is connected to the interior of the container (1) and the other connector of which is open to the atmosphere.

2. Device according to claim 1, **characterised in that** a temperature measuring gauge (6) is provided for detecting the gas temperature in the interior of the container (1).

3. Device according to claim 1 or 2, **characterised in that** a comparator (7) is provided for comparing the gas pressure in the interior of the container (1) with a threshold value (7a).

## Revendications

1. Dispositif pour déterminer le volume d'un gaz sous pression ambiante, avec un réservoir (1) d'un volume prédéterminé, lequel peut être rempli via une conduite d'amenée (2) et vidé via une conduite de sortie (3), une première vanne (2a) étant disposée dans la conduite d'amenée (2) et une deuxième vanne (3a) dans la conduite de sortie (3), un premier manomètre (4) étant prévu pour saisir la pression à l'intérieur du réservoir (1),
**caractérisé en ce**
**qu'**il est prévu un deuxième manomètre (5) pour saisir la pression ambiante et que le premier manomètre (4) est un manomètre différentiel dont un raccord est en communication avec l'intérieur du réservoir (1) et l'autre raccord avec l'environnement.

2. Dispositif selon la revendication 1,
**caractérisé en ce**
**qu'**il est prévu un thermomètre (6) pour saisir la température du gaz à l'intérieur du réservoir (1).

3. Dispositif selon la revendication 1 ou 2,
**caractérisé en ce**
**qu'**il est prévu un comparateur (7) pour comparer la pression du gaz à l'intérieur du réservoir (1) avec une valeur seuil (7a).
